# EUROPEAN PATENT SPECIFICATION

(11) **EP 3 919 272 B1**
(45) Date of publication and mention of the grant of the patent: **21.08.2024**
(21) Application number: 20748635.8
(22) Date of filing: 20.01.2020
(51) Int. Cl.: B32B 27/18, B32B 27/32, B65D 65/40, B65D 85/50

(54) **POLYPROPYLENE RESIN MULTILAYER FILM**
MEHRSCHICHTIGE POLYPROPYLENHARZFOLIE
FILM MULTICOUCHE DE RÉSINE DE POLYPROPYLÈNE

(30) Priority: 29.01.2019 JP 2019013341; 31.10.2019 JP 2019199028
(43) Date of publication of application: 08.12.2021
(73) Proprietor: TOYOBO CO., LTD., Osaka-shi, Osaka 530-0001 (JP)
(72) Inventor: KIRIYAMA, Kazuya, Inuyama-shi, Aichi 484-8508 (JP); IMAI, Toru, Inuyama-shi, Aichi 484-8508 (JP); YOSHII, Tomoya, Inuyama-shi, Aichi 484-8508 (JP)
(74) Representative: Vossius & Partner Patentanwälte Rechtsanwälte mbB
(86) International application number: PCT/JP2020/001654
(87) International publication number: WO 2020/158474

(56) References cited:
- WO-A1-2017/018281
- WO-A1-2017/170330
- JP-A- 2008 284 827
- JP-A- 2015 199 228
- JP-A- 2016 010 894
- No further relevant documents disclosed

## Description

### TECHNICAL FIELD

The present invention relates to a polypropylene-based resin multilayer film and a package comprising the same. In particular, the present invention relates to a polypropylene-based resin multilayer film and a package comprising the same that is suitable for packaging perishable items that should be kept fresh including vegetables, fruits, and plants such as grass and flower (hereinafter, they are referred to as greengrocery) thanks to its heat seal property and anti-fogging effect.

### BACKGROUND ART

Conventionally, polypropylene-based resin multilayer films have been widely used in the packaging field such as food packaging and textile packaging thanks to their superiority in optical properties, mechanical properties, and suitability for packaging. Especially, anti-fog films have been widely used for packaging of greengrocery such as vegetables.

In the field of greengrocery packaging, labor saving of farm work is required because of recent decrease in farm population, and automatic packaging machines have become popular. For the automatic packaging machines for greengrocery, a so-called pillow packaging method and a gusset packaging method are employed, which can simultaneously perform a bag-making process by heat sealing and a filling process of contents.

As a material that can be used for automatic packaging such as pillow packaging, a multilayer film for packaging fresh vegetables consisting of an outer layer of a biaxially stretched film-shaped material the main constituent of which is crystal polypropylene, and a film-shaped material made from olefin**-based polymer having** a **melting point** 10 **to 90°C** lower than that of the outer layer is disclosed (for example, see patent document 1).

However, the film disclosed in the patent document 1 has difficulty in coexistence of low temperature sealing properties and heat seal strength, because propylene-ethylene-butene-1 copolymer is used for a heat seal layer.

Also disclosed is a packaging film consisting of a laminate of two or more layers having a base layer the main constituent of which is polypropylene-based resin, and a heat seal layer the main constituent of which is polyolefin-based resin including propylene-butene-1 copolymer and propylene-ethylene-butene-1 copolymer (for example, see patent document 2).

However, the film disclosed in the patent document 2 has a problem of insufficient heat seal strength.

In recent years, a gusset bag having gussets has become popular when box-shaped items or bulky items are packaged. Gusset packaging includes forming backlining parts by heat sealing, and subsequent forming side gussets to make its capacity bigger. While when using an ordinary bag, contents are likely to be crushed, it is hard to fill contents, and it is difficult for the bag to be closed, when using a gusset bag, contents can be neatly filled without extra space.

In addition, heat sealing a surface layer of the backlining parts with an exterior surface to form a plane improves the appearance of a gusset bag when the gusset bag is on a shelf.

However, the gusset packaging has a problem that the exterior surfaces stick to each other, or the exterior surface of the heat sealed part and the exterior surface near the heat sealed part stick to each other when gusset bags are stacked immediately after being heat sealed, if an opening of the bag is heat sealed after contents have been filled in the bag with a high heat seal temperature due to insufficient low temperature sealing properties of the seal layer, which tends to lead to a break or a hole generated when the stuck bags are tried to be separated, and decreased freshness keeping properties. Such a problem remarkably occurs in packaging process at high speed with machines such as a horizontal pillow packaging machine.

A polypropylene-based resin multilayer film has ever been disclosed that has a base layer main constituent of which is polypropylene-based resin, a surface layer main constituent of which is polypropylene-based resin consisting of at least one copolymer selected from the group consisting of propylene-ethylene-butene-1 copolymer, propylene-buten-1 copolymer, and propylene-ethylene copolymer on one side of the base layer, and a seal layer main constituent of which is polypropylene-based resin consisting of at least one copolymer selected from the group consisting of propylene-ethylene-butene-1 copolymer, propylene-buten-1 copolymer, and propylene-ethylene copolymer on another side of the base layer (for example, see patent document 3).

However, the film disclosed in the patent document 3 is insufficient in low temperature sealing properties, and also unable to prevent the exterior surfaces from sticking to each other.

### RELATED ART DOCUMENT

### PATENT DOCUMENT

Patent Document 1: JP 3104166 B
Patent Document 2: JP 4385443 B
Patent Document 3: WO2017/170330

### SUMMARY OF THE INVENTION

### PROBLEMS TO BE SOLVED BY THE INVENTION

The problem to be solved by the invention is to offer a polypropylene-based resin multilayer film that can be produced at lower cost than ever, has suitability for automatic packaging thanks to its low temperature sealing properties and high heat seal strength, and can be used for various purposes thanks to its suitability for gusset packaging.

### MEANS FOR SOLVING THE PROBLEMS

The present invention is as follows:
A polypropylene-based resin multilayer film, comprising:
a base layer (A) consisting of a polypropylene-based resin composition;
a surface layer (B) consisting of a polypropylene-based resin composition on one side of the base layer (A); and
a seal layer (C) consisting of a polypropylene-based resin composition on the other side of the base layer (A),
the polypropylene-based resin multilayer film satisfying the following a) to d):
   a) a heat shrinkage ratio in a longitudinal direction at 120°C of 3.0 % or less;
   b) an onset temperature of heat seal strength of the seal layer (C) of **100°C or higher and 115°C or lower**;
   c) an onset temperature of heat seal strength of the surface layer (B) of **125°C or higher and 140°C or lower**; and
   d) a thickness of the seal layer (C) in the range of 5% or more and 15% or less with respect to a total thickness of the film.

In this case, a mesopentad fraction of the polypropylene-based resin composition constituting the base layer (A) is preferably 97.5% or more and 99.0% or less.

Additionally, in this case, a ratio of an α olefin monomer-derived component with respect to the total of a propylene monomer-derived component and the α olefin monomer-derived component of the polypropylene-based resin composition constituting the base layer (A) is preferably 0.25% by mole or more and 0.6% by mole or less.

Additionally, in this case, the seal layer (C) of the polypropylene-based resin multilayer film preferably has heat seal reaching strength of 3.0 N/15mm or more, and the surface layer (B) of the polypropylene-based resin multilayer film preferably has heat seal reaching strength of 3.0 N/15mm or more.

Additionally, in this case, the seal layer (C) preferably contains more than one polypropylene-based resins, a polypropylene-based resin having the lowest melting point among the more than one polypropylene-based resins preferably has a melting point of 70 to **100°C, and a content of the polypropylene**-based resin having the lowest melting point with respect to the total of the seal layer (C) is preferably 1% by weight or more and 50% by weight or less.

Still additionally, in this case, the seal layer (C) preferably contains more than one polypropylene-based resins, a polypropylene-based resin having the highest melting point among the more than one polypropylene-based resins preferably **has a melting point of 100°C or higher and 140°C or lower, and a content of the po**lypropylene-based resin having the highest melting point is preferably 50% by weight to 99% by weight.

Still additionally, in this case, the seal layer (C) preferably contains more than one polypropylene-based resins, the more than one polypropylene-based resins preferably have a **melting point in the range of 70 to 140°C, a content of polypropylene**-based resins having a **melting point of 70 to 100°C** is preferably 1% by weight or more and 50% by weight or less, and a content of polypropylene-based res**ins having a melting point of 100 to 140°C is** preferably 50% by weight or more and 99% by weight or less.

Still additionally, in this case, polypropylene-based resin contained in the surface **layer (B) has a melting point in the range of 120 to 140°C**.

Still additionally, in this case, a package is preferably made using the polypropylene-based resin multilayer film.

### EFFECTS OF THE INVENTION

The polypropylene-based resin multilayer film of the present invention can offer better suitability for gusset packaging than ever by optimizing composition and thickness of each layer.

### MODE FOR CARRYING OUT THE INVENTION

### (Base layer (A))

Abase layer (A) of the present invention consists of a polypropylene-based resin composition, and the polypropylene-based resin composition is preferably mainly composed of propylene homopolymer and at least one propylene-α olefin copolymer selected from the group consisting of copolymers of propylene containing 90% by mole or more of propylene and other α olefins, the content of which in the polypropylene-based resin composition constituting the base layer (A) is preferably 95% by weight or more, more preferably 97% by weight or more, and even more preferably 99% by weight or more.

### (Propylene-α olefin copolymer)

As the other α olefins constituting the propylene-α olefin copolymer, α olefins having 2 to 8 carbon atoms such as ethylene, butene-1, pentene-1, hexane-1, 4-methyl-1-pentene are preferable.

The propylene-α olefin copolymer is preferably random or block copolymer obtained by polymerizing propylene and one or two of the above exemplified α olefins, and it is preferably propylene-ethylene copolymer, propylene-butene-1 copolymer, propylene-ethylene-butene-1 copolymer or propylene-pentene-1 copolymer.

The lower limit of a melt flow rate (MFR) of the propylene-α olefin copolymer **measured at 230°C**, 2.16 kgf is preferably 2.0 g/lOmin, more preferably 2.2 g/lOmin, and even more preferably 2.5 g/lOmin, particularly preferably 2.8 g/lOmin, and most preferably 3.0 g/lOmin. When the MFR is 2.0 g/lOmin or more, mechanical load can be reduced and the film can be easily stretched.

On the other hand, the upper limit of the MFR of the propylene-α olefin copolymer is preferably 5 g/lOmin, more preferably 4.7 g/lOmin, and even more preferably 4.5 g/lOmin, particularly preferably 4 g/lOmin, and most preferably 3.5 g/lOmin. When the MFR is 5 g/10min or less, the film can be easily stretched, thickness variation can be reduced, and a stretching temperature and a heat setting temperature can be easily set higher to reduce heat shrinkage ratio.

A ratio of α olefin monomer-derived component of the propylene-α olefin copolymer is preferably 0.1% by mole or more, more preferably 0.2% by mole or more, and even more preferably 0.25% by mole or more. With the ratio of 0.1% by mole or more, heat seal reaching strength can be easily increased; with the ratio of 0.2% by mole or more, anti-fogging effect can be easily improved. On the other hand, the ratio of α olefin monomer-derived component of the propylene-α olefin copolymer is preferably 0.6% by mole or less, more preferably 0.5% by mole or less, and even more preferably 0.4% by mole or less. The ratio of 0.6% by mole or less improves crystallizability to reduce heat shrinkage ratio at a high temperature.

The lower limit of a mesopentad fraction of the propylene-α olefin copolymer is preferably 90%, more preferably 95%, and even more preferably 97%. The mesopentad fraction of 90% or more can lead to improved crystallizability to reduce heat shrinkage ratio at a high temperature. The upper limit of the mesopentad fraction is preferably 99.5%, more preferably 99%, and even more preferably 98%. The mesopentad fraction of 99.5% or less enables film production in a realistic way and improvement of anti-fogging effect.

### (Propylene homopolymer)

The propylene homopolymer is preferably isotactic propylene homopolymer insoluble in n-heptane.

Insolubility in n-heptane is a measure for both crystallizability of polypropylene and safety as a package for food, and it is a preferable embodiment in the present invention that propylene homopolymer having n-heptane insolubility in conformity with Public Notice of the Ministry of Health No. 20 of February, 1982 (an elution amount is 150 ppm or less when extracted at 25°C for 60 minutes [30 ppm or less in the case of operating temperatures of 100°C or higher]) is used.

The lower limit of a melt flow rate (MFR) of the isotactic propylene homopolymer measured at 230°C, 2.16 kgf is preferably 5 g/lOmin. The lower limit of the MFR is preferably 6 g/lOmin, more preferably 6.5 g/lOmin, even more preferably 7 g/lOmin, and particularly preferably 7.3 g/lOmin. When the MFR is 5 g/lOmin or more, mechanical load can be reduced and the film can be easily stretched.

On the other hand, the upper limit of the MFR of the isotactic propylene homopolymer is preferably 10 g/lOmin, more preferably 9.5 g/lOmin, even more preferably 9 g/lOmin, particularly preferably 8.5 g/lOmin, and most preferably 8 g/lOmin. When the MFR is 10 g/lOmin or less, the film can be easily stretched, thickness variation can be reduced, and a stretching temperature and a heat setting temperature can be easily set higher to make it easier for heat shrinkage ratio to be reduced.

The lower limit of a mesopentad fraction of the isotactic propylene homopolymer is preferably 97%, and more preferably 98%. The mesopentad fraction in the above range can lead to improved crystallizability and reduced heat shrinkage ratio at a high temperature. The upper limit of the mesopentad fraction is preferably 99.5%, and more preferably 99%. The mesopentad fraction in the above range enables film production in a realistic way and improvement of anti-fogging effect.

### (Polypropylene-based resin composition constituting base layer (A))

A mesopentad fraction of the total polypropylene-based resin composition constituting the base layer (A) is preferably 97.5% or more. The lower limit of the mesopentad fraction is more preferably 97.8%. The mesopentad fraction of 97.5% or more can lead to improved crystallizability and reduced heat shrinkage ratio at a high temperature. The upper limit of the mesopentad fraction is preferably 99.0%, more preferably 98.8%, and even more preferably 98.5%. The mesopentad fraction of 99.0% or less enables film production in a realistic way.

A ratio of the α olefin monomer-derived component with respect to the total of a propylene monomer-derived component and the α olefin monomer-derived component of the total polypropylene-based resin composition constituting the base layer (A) is preferably 0.1% by mole or more, preferably 0.2% by mole or more, even more preferably 0.25% by mole or more, particularly preferably 0.28% by mole or more. The ratio of 0.1% by mole or more leads to improved anti-fogging effect. On the other hand, the ratio of the α olefin monomer-derived component with respect to the total of a propylene monomer-derived component and the α olefin monomer-derived component is preferably 0.6% by mole or less, more preferably 0.5% by mole or less, and even more preferably 0.4% by mole or less. The ratio of 0.6% by mole or less leads to improved crystallizability and reduced heat shrinkage ratio at a high temperature.

The lower limit of a melt flow rate (MFR) of the total polypropylene-based resin composition constituting the base layer (A) measured at 230°C, 2.16 kgf is preferably 3.0 g/lOmin. The lower limit of the MFR of the total resin composition is more preferably 4.0 g/lOmin, and even more preferably 4.5 g/lOmin. When the MFR is in the above range, mechanical load can be reduced and the film can be easily stretched. On the other hand, the upper limit of the MFR of the total resin composition is preferably 6.0 g/10min, more preferably 5.5 g/lOmin, even more preferably 5.0 g/lOmin, and particularly preferably 4.0 g/10min. When the MFR is in the above range, the film can be easily stretched, thickness variation can be reduced, and a stretching temperature and a heat setting temperature can be easily set higher to reduce heat shrinkage ratio.

A melting point of the total polypropylene-based resin composition constituting the base layer (A) is 158°C or higher, and more preferably 159°C or higher. With the melting point of 158°C or higher, effect of the present invention including reduced heat shrinkage ratio at a high temperature can be easily obtained.

The polypropylene-based resin composition constituting the base layer (A) preferably includes an anti-fogging agent, and the anti-fogging agent can be exemplified by fatty acid esters of polyol, amines of higher fatty acid, amides of higher fatty acid, and ethylene oxide additive of amines or amides of higher fatty acid. A content of the anti-fogging agent in the multilayer film with respect to the total layers is preferably 0.1 to 10% by weight, and particularly preferably 0.2 to 5% by weight.

In addition, in a range not undermining the effect of the present invention, the polypropylene-based resin composition constituting the base layer (A) may also contain various additives for improvement in quality such as slipperiness and anti-static properties, for example, wax for improvement in productivity, lubricant such as metal soap, plasticizer, process aids and generally known heat stabilizer, antioxidant, antistatic agent, and ultraviolet absorber.

### (Seal layer (C))

A seal layer (C) of the present invention consists of a polypropylene-based resin composition, and the polypropylene-based resin composition is preferably mainly composed of propylene-α olefin copolymer, the content of which in the polypropylene-based resin composition constituting the seal layer (C) is preferably 95% by weight or more, more preferably 97% by weight or more, and even more preferably 99% by weight or more.

As the α olefin of propylene-α olefin copolymer, α olefins having 2 to 8 carbon atoms such as ethylene, butene-1, pentene-1, hexane-1, 4-methyl-1-pentene are preferable.

More preferably, as the propylene-α olefin copolymer, at least one copolymer selected from the group consisting of propylene-ethylene-butene-1 copolymer, propylene-butene-1 copolymer, and propylene-ethylene copolymer is mainly used.

An onset temperature of heat seal strength of the seal layer (C) is preferably 100°C or higher and 115°C or lower, and more preferably 105°C or higher and 113°C or lower. The onset temperature of heat seal strength of the seal layer (C) is a temperature at which heat seal strength becomes 1 N/15mm when two surfaces of a seal layer (C) are placed face-to-face, and then heat sealed under a heat seal pressure of 1 kg/cm² for 1 second.

When the onset temperature of heat seal strength of the seal layer (C) is 115°C or lower, heat sealing having sufficient strength is available even with a low heat seal temperature to enable automatic packaging to be operated at a high speed. In addition, it also leads to improved sealing performance of a sealed part, and the improved sealing performance, in combination with anti-fogging effect, enables greengrocery to be kept fresh, enables the content to be good looking, and leads to improved operability of the package. Furthermore, it enables the difference from a melting point of polypropylene-based resin of the base layer (A) to be appropriately large, which makes it easier for operating speed of automatic packaging to be higher; since it makes sufficient heat seal strength to be easily obtained even with a low heat seal temperature, the total multilayer film is unlikely to shrink when heat sealed; since it is unlikely to lead to wrinkles at a heat sealed part, poor sealing at the heat sealed part is unlikely to occur.

Moreover, it also enables the difference from a melting point of polypropylene-based resin of the surface layer (B) to be appropriately large, and therefore, exterior surfaces are unlikely to stick to each other when the products are stacked immediately after being heat sealed.

When the onset temperature of heat seal strength of the seal layer (C) is 105°C or higher, it prevents the difference from a melting point of the base layer (A) from being too large, and therefore, the base layer (A) and the seal layer (C) are unlikely to peel from each other, which makes it easier for heat seal strength to be secured sufficient for automatic packaging.

To make the onset temperature of heat seal strength of the seal layer (C) 105 to 115°C, the combination of propylene-butene-1 copolymer and propylene-ethylene copolymer is preferable.

Heat seal reaching strength of the seal layer (C) is preferably 3.0 N/15mm or more, more preferably 4.0 N/15mm or more, and even more preferably 5.0 N/15mm or more. The heat seal reaching strength of less than 3.0 N/15mm is insufficient to prevent the content from dropping off from an package made by automatic packaging. The heat seal reaching strength is a maximum value of heat seal strength when two surfaces of the seal layer (C) of the film of the present invention are placed face-to-face, and then heat sealed using a thermal gradient tester (manufactured by Toyo Seiki Co., Ltd.) at heat seal temperatures of 100 to 150°C under a heat seal pressure of 1 kg/cm² for 1 second.

In conventional technology, while propylene-butene copolymer having low melting point is added to resin of a seal layer to obtain seal strength at a low temperature, propylene-butene copolymer has poor compatibility with homopolypropylene resin of the core layer and interfacial peeling is more likely to occur because it contains a high proportion of butene component and ethylene component. In addition, because of increased thickness of the seal layer, interfacial peeling is more likely to occur, and sufficient heat seal strength could not be obtained. Accordingly, in the present invention, the polypropylene-based resin composition constituting the seal layer (C) preferably includes more than one polypropylene-based resins.

A polypropylene-based resin having the lowest melting point among the more than one polypropylene-based resins of the polypropylene-based resin composition constituting the seal layer (C) preferably has a melting point of 70°C or higher and 100°C or lower.

A content of the polypropylene-based resin having the lowest melting point is preferably 1% by weight or more and 50% by weight or less. The content is more preferably 1% by weight or more and 25% by weight or less, and even more preferably 1% by weight or more and 20% by weight or less. When the content is 50% by weight or less, interlayer strength with the base layer (A) is easily obtained to lead sufficient seal strength. The content of 1% by weight or less is likely to lead to insufficient seal strength at a low temperature.

A polypropylene-based resin having the highest melting point among the more than one polypropylene-based resins of the polypropylene-based resin composition constituting the seal layer (C) preferably has a melting point of 100°C or higher and 140°C or lower, and a content of the polypropylene-based resin having the highest melting point is preferably 50% by weight or more and 99% by weight or less. The melting point is more preferably 120°C or higher and 135°C or lower. When the melting point is 140°C or lower, it is easier for heat seal strength at a low temperature to be sufficient and improve reliability as a package. The melting point of 100°C or higher easily improve interlayer strength with the base layer (A) to obtain sufficient seal strength.

The more than one polypropylene-based resins in the polypropylene-based resin composition constituting the seal layer (C) preferably have a melting point in the range of 70 to 140°C, a content of polypropylene-based resins having a melting point of 70 to 100°C is particularly preferably 1% by weight or more and 50% by weight or less, and a content of polypropylene-based resins having a melting point of 100 to 140°C is particularly preferably 50% by weight or more and 99% by weight or less; the content of polypropylene-based resins having melting point of 70 to 100°C is particularly preferably1% by weight or more and 20% by weight or less, and the content of polypropylene-based resins having a melting point of 100 to 140°C is particularly preferably 80% by weight or more and 99% by weight or less.

A thickness of the seal layer (C) is preferably in the range of 5 to 15% with respect to the total thickness of the film, more preferably 5 to 12%, and even more preferably 5 to 10%. The thickness of less than 5% leads to insufficient heat seal strength; the thickness of more than 15% leads to insufficient interlayer strength.

The polypropylene-based resin composition constituting the seal layer (C) preferably contains an anti-fogging agent.

This is because, as described above, it can prevent the interior of a package of **greengrocery from fogging due to greengrocery's phys**iological activity when the package of greengrocery is distributed or displayed on the shelf in a supermarket.

The anti-fogging agent can be exemplified as a typical one by fatty acid esters of polyol, amines of higher fatty acid, amides of higher fatty acid, and ethylene oxide additive of amines or amides of higher fatty acid. A content of the anti-fogging agent in the film with respect to the total layers is preferably 0.1 to 10% by weight, and particularly preferably 0.2 to 5% by weight.

In order to add an anti-fogging agent to the polypropylene-based resin composition constituting the seal layer (C), the anti-fogging agent may be added to each resin composition constituting every layer of the packaging film of the present invention, may be added to polypropylene-based resin compositions constituting the base layer (A) and the seal layer (C), may be added only to polypropylene-based resin composition constituting the base layer (A), or may be added only to polypropylene-based resin composition constituting the seal layer (C) when the multilayer film is produced.

In the case where a polypropylene-based resin composition constituting the seal layer (C) does not contain an anti-fogging agent, the interior of a package of greengrocery with the multilayer film becomes cloudy, and the greengrocery is likely to quickly decay, which degrades its commercial value.

In the case where an anti-fogging agent is added only to a polypropylene-based resin composition constituting the base layer (A), the anti-fogging agent in the base layer (A) gradually migrates to the seal layer while the film is produced or stored, and further bleeds out on the surface of the seal layer (C) to make the seal layer (C) have anti-fogging effect.

Especially, the effect is exhibited when greengrocery, the physiological activity of which continues even after being harvested, is packaged.

In order to keep improved anti-fogging effect on a long-term basis during a distribution process, since it is preferred that a package is stored at a room temperature rather than at a temperature for frozen storage, an anti-fogging agent is preferably selected in such a manner that the anti-fogging agent exhibits continuous anti-fog effect during repeated changes in temperature in the range of 5 to 30°C, considering changes in temperature during the distribution process.

### (Surface layer (B))

A surface layer (B) of the present invention consists of a polypropylene-based resin composition, and the polypropylene-based resin composition is preferably mainly composed of propylene-α olefin copolymer, the content of which in the polypropylene-based resin composition constituting the surface layer (B) is preferably 95% by weight or more, more preferably 97% by weight or more, and even more preferably 99% by weight or more.

As the α olefin of propylene-α olefin copolymer, α olefins having 2 to 8 carbon atoms such as ethylene, butene-1, pentene-1, hexane-1, 4-methyl-1-pentene are preferable.

More preferably, as the propylene-α olefin copolymer, at least one copolymer selected from the group consisting of propylene-ethylene-butene-1 copolymer, propylene-butene-1 copolymer, and propylene-ethylene copolymer is mainly used.

An onset temperature of heat seal strength when two surfaces of the surface layer (B) are overlapped and then heat sealed is preferably 125°C or higher and 140°C or lower. More preferably, the temperature is 125°C or higher and 135°C or lower. To make the onset temperature of heat seal strength of the surface layer (B) 125°C or higher and 140°C or lower, the copolymer is preferably selected so as to include propylene-ethylene-butene-1 copolymer.

The onset temperature of heat seal strength of the surface layer (B) is a temperature at which heat seal strength becomes 1 N/15mm when two surfaces of the surface layer (B) are placed face-to-face, and then heat sealed under a heat seal pressure of 1 kg/cm² for 1 second. When the onset temperature of heat seal strength of the surface layer (B) is 125°C or higher, the surface layer (B) is less likely to fuse to a seal bar when a pillow package is heat sealed, which leads to easy production of a bag. When the onset temperature is 140°C or lower, exterior surfaces at backlining parts and gussets after gusset packaged are less likely to fuse to each other to improve appearance, and backlining parts do not get caught by each other when bags are stacked to reduce the probability of seal peeling.

A thickness of the surface layer (B) is preferably in the range of 1 to 10% with respect to the total thickness of the film, more preferably 1 to 7%, and even more preferably 1 to 5%. The thickness of less than 1% leads to insufficient heat seal strength at backlining parts and gusset parts; the thickness of more than 10% causes problems such as sticking between exterior surfaces when bags are stacked immediately after being heat sealed.

Heat seal reaching strength of the surface layer (B) is preferably 3.0 N/15mm or more, and more preferably 3.5 N/15mm or more. The heat seal reaching strength of less than 3.0 N/15mm is insufficient as seal strength at gusset parts of a gusset package. The heat seal reaching strength is a maximum value of heat seal strength when two surfaces of the surface layer (B) of the film of the present invention are placed face-to-face, and then heat sealed using a thermal gradient tester (manufactured by Toyo Seiki Co., Ltd.) at heat seal temperature of 100 to 150°C under a heat seal pressure of 1 kg/cm² for 1 second.

A surface of the surface layer (B) preferably has anti-fogging effect. This is because a cloudy surface due to moisture condensation and the like deteriorates appearance when packages of greengrocery are displayed on the shelf, for example, in a supermarket. Therefore, an anti-fogging agent is preferably added to resin constituting the surface layer (B).

The anti-fogging agent added to a polypropylene-based resin composition constituting the surface layer (B) can be exemplified as a typical one by fatty acid esters of polyol, amines of higher fatty acid, amides of higher fatty acid, and ethylene oxide additive of amines or amides of higher fatty acid. A content of the anti-fogging agent in the film with respect to the total layers is preferably 0.1 to 10% by weight, and particularly preferably 0.2 to 5% by weight.

In order to add an anti-fogging agent to the polypropylene-based resin composition constituting the surface layer (B), the anti-fogging agent may be added to each resin constituting every layer of the packaging film of the present invention, may be added to polypropylene-based resins constituting the base layer (A) and surface layer (B), may be added only to polypropylene-based resin constituting the base layer (A), or may be added only to polypropylene-based resin constituting the surface layer (B) when the multilayer film is produced.

In the case where a polypropylene-based resin composition constituting the surface layer (B) does not contain an anti-fogging agent, the exterior of a package of greengrocery with the multilayer film becomes cloudy to degrade its commercial value.

In the case where an anti-fogging agent is added only to a polypropylene-based resin composition constituting the base layer (A), the anti-fogging agent in the base layer (A) gradually migrates to the surface layer (B) while the film is produced or stored, and further bleeds out on the surface of the surface layer (B) to make the surface layer (B) have anti-fogging effect.

Especially, the effect is exhibited when greengrocery, the physiological activity of which continues even after being harvested, is packaged.

To keep improved anti-fogging effect on a long-term basis during a distribution process, preferably selected is an anti-fogging agent that exhibits continuous anti-fogging effect during repeated changes in temperature in the range of 5 to 30°C considering changes in temperature during the distribution process, because it is preferred that a package is stored at a room temperature rather than at a temperature for frozen storage.

In addition, in a range not undermining the effect of the present invention, the polypropylene-based resin composition constituting the surface layer (B) may also contain various additives for improvement in quality such as slipperiness and anti-static properties, for example, wax for improvement in productivity, lubricant such as metal soap, plasticizer, process aids, and generally known heat stabilizer, antioxidant, antistatic agent, and ultraviolet absorber that are usually added to polypropylene-based films. Moreover, inorganic or organic fine particles also can be added to secure anti-blocking property and slipperiness of the film.

Inorganic fine particles are exemplified by silicon dioxide, calcium carbonate, titanium dioxide, talc, kaolin, mica, and zeolite. Any shapes are available for them including spherical shape, elliptical shape, circular cone shape, and indefinite shape, and a diameter of the particles also may be appropriately selected in accordance with purpose and usage of the film. Organic fine particles may be cross-link particles such as acrylic, methyl acrylate, styrene-butadiene, shapes and size of which can be appropriately selected similarly as the inorganic fine particles. Furthermore, various surface treatments can be performed on the inorganic or organic fine particles. These fine particles can be used alone, or used in combination.

### (Film thickness)

Film thickness of the polypropylene-based resin multilayer film of the present invention depends on purpose and usage of the film, however, polypropylene-based films as a package film usually have a thickness of 10 to 100 µm, and more preferably 15 to 50 µm from a viewpoint of mechanical strength and transparency.

### (Heat shrinkage ratio)

It is important for a heat shrinkage ratio in a longitudinal direction at 120°C of the polypropylene-based resin multilayer film of the present invention to be 3.0% or less, preferably 2.5% or less, and even more preferably 2.0% or less. The heat shrinkage ratio of 3.0% or less allows reduction in wrinkles due to heat during a printing process or heat sealing in a bag-making process, as well as reduction of deformation of a heat sealed part during heat sealing, which eliminates or reduces sticking between an exterior surface and a surface of the surface layer (B) at a heat sealed part after being packaged.

A heat shrinkage ratio in a width direction at 120°C of the polypropylene-based resin multilayer film of the present invention is preferably 3% or less, more preferably 2.0% or less, and even more preferably 1.0% or less. The heat shrinkage ratio of 3% or less allows reduction in wrinkles due to heat during a printing process or heat sealing in a bag-making process, as well as reduction of deformation of a heat sealed part during heat sealing, which eliminates or reduces sticking between an exterior surface and a surface of the surface layer (B) at a heat sealed part after being packaged.

**Note that "longitudinal direction" of the polypropylene**-based resin multilayer film of the present invention is a direction corresponding to a machine direction in a film producing process, **and "width direction" is a direction or**thogonal to the machine direction in a film producing process.

### (Process for producing the film)

The polypropylene-based resin multilayer film of the present invention can be produced by the following process, however, is not limited thereto.

Exemplified is a process including melt lamination by a T-die method or a inflation method using extruders corresponding to the number of layers to be laminated, followed by cooling by a cooling roll method, a water cooling method, or an air cooling method to produce a laminated film, and stretching by a sequential biaxial stretching process, a simultaneous biaxial stretching process, or a tube stretching process.

The conditions of a process including the sequential biaxial stretching may include melt extruding resin from a T-die, which is cooled and solidified with a casting machine to produce a master sheet.

A temperature for the melt lamination is preferably determined with reference to the melting point of raw resin used for each layer as a guide in the range of 240 to 300°C. A temperature of a casting roll is preferably set in the range of 15 to 40°C in order to reduce crystallization of the resin and improve transparency.

Subsequently, the master sheet is heated to a temperature appropriate to stretching, and then stretched in the machine direction using difference in speed of stretching rolls. Stretch ratio in the machine direction is preferably 3 to 6 times from a viewpoint of stable production without unevenness of stretching. Stretch temperature in the machine direction is preferably 100 to 150°C also from a viewpoint of stable production without unevenness of stretching.

Then, the longitudinally stretched sheet is gripped with tenter clips at both ends, and gradually stretched in the width direction while being heated by hot air .to a temperature appropriate for stretching. Stretch ratio in the width direction is preferably 7 to 10 times from a viewpoint of variation in thickness and productivity. Stretch temperature in the width direction is preferably 130 to 180°C from a viewpoint of stable production without unevenness of stretching.

Finally, a heat set process is preferably performed in the range of 150 to 200°C.

The polypropylene-based resin multilayer film of the present invention can be surface treated to improve printability and properties of lamination with other members. Processes for the surface treatment is not particularly limited, and exemplified by corona discharge treatment, plasma treatment, flame treatment, and acid treatment. They can be performed serially, and the corona discharge treatment, the plasma treatment, and the flame treatment, which can be easily performed before a roll-up process of the process for producing the film, are preferable.

### EXAMPLES

Hereinafter, the present invention will be specifically described with reference to examples, however, the present invention is not limited by the examples but can be carried out with appropriate changes to the examples within a scope in compliance with its gist. The properties in the present specification is measured or evaluated in the following way.

### (1) DSC melting point

A temperature of the maximum melting peak of a DSC curve of a polyolefin-based resin film obtained with a Shimadz differential scanning calorimeter DSC-60 manufactured by Shimadzu corporation was determined to be a melting point. The start temperature was 30°C, the temperature ramp rate was 5°C/min, and the end temperature was 180°C. Five samples were measured and the average value was calculated.

### (2) Mesopentad fraction

Mesopentad fraction ([mmmm]%) of polypropylene resin was measured with 13C-NMR, **and calculated in accordance with the process described in "**Zambelli et al., Macromolecules, vol. 6, page 925, 1973". For 13C-NMR measurement, 200 mg of a sample was dissolved in a mixed solvent of o-dichlorobenzene-d4 and benzene-d6 at the ratio of 8:2 at 135°C, and measured at 110°C using AVANCE500 manufactured by Bruker corporation. Five samples were measured and the average value was calculated.

As for polypropylene-based resin composed of a mixture of two or more polypropylene resins, the mixture was measured in the above way to determine its mesopentad fraction.

### (3) Melt flow rate (MFR)

Melt flow rate (MFR) was measured in accordance with JIS K7210 at 230°C under a load of 2.16 kgf.

For a melt flow rate of polypropylene-based resin composed of a mixture of two or more polypropylene resins, the mixture was measured in the above way and the obtained value was used.

### (4) Ratio of α olefin monomer-derived component (% by mole)

Contents of propylene, butene-1, and ethylene in propylene-ethylene copolymer, propylene-butene-1 copolymer, and propylene-ethylene-butene-1 copolymer were determined by 13C-NMR spectrum method in accordance with the method described in pages 615-617, Polymer Analysis handbook (issued by Kinokuniya Co. Ltd., 1995). They also can be determined by IR spectrum method in accordance with the method described in page 256, **item "(i) Random copolymer" of the handbook.**

For a ratio of α olefin monomer-derived component of polypropylene-based resin composed of a mixture of two or more polypropylene resins, the mixture was measured in the above way and the obtained value was used.

### (5) Total thickness of the film

A sample of a polypropylene-based resin multilayer film the size of which was 1 cm x 1 cm was cut out, and a cross-section sample was made with a microtome, which was observed with a differential interference microscope to determine a thickness of the base layer (A), a thickness of the surface layer (B), and a total thickness of the film. Five areas of the sample were observed to calculate the average.

### (6) Ratio of α olefin monomer-derived component (% by mole)

Contents of propylene, butene-1, and ethylene in propylene-ethylene copolymer, propylene-butene-1 copolymer, and propylene-ethylene-butene-1 copolymer were determined by 13C-NMR spectrum method in accordance with the method described in pages 615-617, Polymer analysis handbook (issued by Knokuniya Co. Ltd., 1995). They also can be determined by IR spectrum method in accordance with the method described in page 256, **item "(i) Random copolymer" of the handbook.**

For an isotactic mesopentad fraction of polypropylene-based resin composed of a mixture of two or more polypropylene resins, the mixture was measured in the above way and the obtained value was used.

### (7) Thickness of layer

A sample of a polypropylene-based resin multilayer film the size of which was 1 cm x 1 cm was cut out, and then embedded in ultraviolet curable resin, which was cured with UV radiation for 5 minutes. The sample was made into a cross-section sample with a microtome, which was observed with a differential interference microscope to determine a thickness of the surface layer (B), and a thickness of the seal layer (C). Five areas of the sample were observed to calculate the average.

### (8) Onset temperature of heat seal strength of the seal layer (C) and the surface layer (B)

An onset temperature is a temperature at which heat seal strength becomes 1 N/15mm when two surfaces of the seal layer (C) of a polypropylene-based resin multilayer film were placed face-to-face, and then heat sealed under a heat seal pressure 1 kg/cm² for 1 second using a thermal gradient tester (manufactured by Toyo Seiki Co., Ltd.). Two surfaces of the heat seal layer of the film each of which had the size of 5 cm x 20 cm were placed face-to-face, and heat sealed with five heat seal bars (seal surface of 1 cm x 3 cm) simultaneously each of which had different temperatures by 5°C. The center part of the sample was cut so that the width was 15 mm, which was set to an upper chuck and a lower chuck of a tensile tester. Strength was measured when each sample was drawn at a tension rate of 200 mm/min to obtain heat seal strength (the unit is N/15mm). A line graph was prepared with the temperature on the abscissa and the heat seal strength on the ordinate to determine a temperature at which heat seal strength became 1 N/15mm as the onset temperature of heat seal strength of the seal layer (C).

Two surfaces of the surface layer (B) of a polypropylene-based resin multilayer film were placed face-to-face, and an onset temperature of heat seal strength of the surface layer (B) was measured in the same manner as the measurement of the onset temperature of heat seal strength of the seal layer (C).

### (9) Heat seal reaching strength of the seal layer (C) and the surface layer (B)

Two surfaces of the seal layer of a polypropylene-based resin multilayer film were placed face-to-face, and then heat sealed using a thermal gradient tester (manufactured by Toyo Seiki Co., Ltd.) under a heat seal pressure of 1 kg/cm² for 1 second. The center part of the sample was cut so that the width was 15 mm, which was set to an upper chuck and a lower chuck of a tensile tester to obtain heat seal strength when the sample was drawn at a tension rate of 200 mm/min (the unit is N/1 5mm). With the upper limit of heat seal temperature 150°C, a maximum strength was determined as a heat seal reaching strength of the seal layer (C).

Two surfaces of the surface layer (B) of a polypropylene-based resin multilayer film were placed face-to-face, and a heat seal reaching strength of the surface layer (B) was measured in the same manner as the measurement of the heat seal reaching strength of the seal layer (C).

### (10) Suitability for automatic packaging

Two surfaces of the heat seal layer of a polypropylene-based resin multilayer film were placed face-to-face, and then heat sealed using a thermal gradient tester (manufactured by Toyo Seiki Co., Ltd.) under a heat seal pressure of 1 kg/cm² for 1 second.

Properties for automatic packaging was evaluated in accordance with the following standard based on the onset temperature of heat seal strength and whether the surface layer (B) stuck to a seal bar during heat sealing.
Excellent: no sticking to a seal bar, the onset temperature of 115°C or higher and 125°C or lower
Fair: no sticking to a seal bar, the onset temperature of lower than 115°C or higher than 125°C Bad: sticking to a seal bar

### (11) Suitability for gusset packaging

Two surfaces of the heat seal layer of a polypropylene-based resin multilayer film were placed face-to-face, and then heat sealed using a thermal gradient tester (manufactured by Toyo Seiki Co., Ltd.) under a heat seal pressure of 1 kg/cm² for 1 second.

Properties for gusset packaging was evaluated in accordance with the following standard based on the onset temperature of heat seal strength of the seal layer (C) and the surface layer (B).
Excellent: the onset temperature of heat seal strength of the seal layer of 100°C or higher and 115°C or lower, and the onset temperature of heat seal strength of the surface layer of 125°C or higher and 140°C or lower
Fair: the onset temperature of heat seal strength of the seal layer of lower than 100°C or higher than 115°C, and the onset temperature of heat seal strength of the surface layer of 125°C or higher and 140°C or lower; or the onset temperature of heat seal strength of the seal layer of 100°C or higher and 115°C or lower, and the onset temperature of heat seal strength of the surface layer of lower than 125°C or higher than 140°C
Bad: the onset temperature of heat seal strength of the seal layer of lower than 100°C or higher than 115°C, and the onset temperature of heat seal strength of the surface layer of lower than 125°C or higher than 140°C

### (12) Heat shrinkage ratio

Heat shrinkage ratio was measured in the following manner. Each sample was cut from the film in the longitudinal direction and the width direction respectively, each of which had 20 mm in width and 200 mm in length. These samples were hung in a hot air oven at 120°C, and heated for 5 minutes. Length of the heated samples was measured to obtain reduced length due to shrinkage, the ratio of which to the length of the sample before being heated was determined as the heat shrinkage ratio at 120°C. In the same manner, heat shrinkage ratio at 150°C was also determined.

### (13) Anti-fogging effect

1. In a container having an upper opening and a content of 500 cc, 300 cc of hot water of 50°C was put.
2. The upper opening of the container was sealed with the film such that the film surface anti-fogging effect of which was to be measured was facing inside.
3. The container was left in a low-temperature room at 5°C.
4. With the hot water in the container completely cooled to the temperature of the low-temperature room, the film surface was evaluated how much dews attached on a five-point scale.

1st rank evaluation: no dews (an area having dews: 0)
2nd rank evaluation: some dews (an area having dews: 1/4 or less)
3rd rank evaluation: dews on about half area of the surface (an area having dews: 2/4 or less)
4th rank evaluation: dews on almost area of the surface (an area having dews: 3/4 or less)
5th rank evaluation: dews on all area of the surface (an area having dews: 3/4 or more)

### (Resin)

Resin constituting each layer used in the following production examples were as follows.

[PP-1]: A mixture obtained by melt mixing anti-fogging agent (TBD-1 manufactured by Matsumoto Yushi-Seiyaku Co., Ltd., content of stearylamine monostearate: 74% by weight, content of stearylamine: 12% by weight, content of glycerin monostearate: 11% by weight, content of glycerin distearate: 3% by weight) and antistatic agent (KYM-4K manufactured by Matsumoto Yushi-Seiyaku Co., Ltd., content of stearylamine stearate: 100% by mass) to propylene-ethylene random copolymer (FS2011GDG3 manufactured by Sumitomo Chemical Co., Ltd., MFR: 2.5 g/lOmin, melting point: 158°C, mesopentad fraction: 97.0%, ethylene component: 0.6% by mole) at a resin temperature of 240°C such that the content of the anti-fogging agent was 1.14% by weight and the content of the antistatic agent was 0.59% by weight

[PP-2]: A mixture obtained by melt mixing antistatic agent (KYM-4K manufactured by Matsumoto Yushi-Seiyaku Co., Ltd., content of stearylamine stearate: 100% by mass) to isotactic propylene homopolymer (FS8052 manufactured by Japan Polypropylene Corporation, MFR: 7.5 g/lOmin, melting point: 162.5°C, mesopentad fraction: 98.9%, ethylene component: 0% by mole) at a resin temperature of 240°C such that the content of the antistatic agent was 1.68% by weight

[PP-3]: A mixture obtained by melt mixing stearic acid monoglyceride (RIKEMAL S100 manufactured by Riken Vitamin Co., Ltd.), amorphous silica, and erucamide to a mixture of propylene-butene copolymer and propylene-ethylene copolymer (SP7834 manufactured by Sumitomo Chemical Co., Ltd., content of butene: 12% by weight, content of ethylene: 2.5% by weight, MFR: 7.0 g/min, melting point: 126°C) at a resin temperature of 240°C such that the content of the stearic acid monoglyceride was 0.56% by weight, the content of the amorphous silica was 0.39% by weight, and the content of erucamide was 0.17% by weight

[PP-4]: Propylene-ethylene copolymer (Vistamaxx 3980FL manufactured by Exxon Mobile corporation, content of ethylene: 9% by weight, MFR: 8.3 g/lOmin, melting point: 78°C)

[PP-5]: Propylene-butene copolymer (SPX78P9 manufactured by Sumitomo Chemical Co., Ltd., MFR: 7.0 g/lOmin, melting point: 128°C)

[PP-6]: Propylene-ethylene random copolymer (FS2011GDG3 manufactured by Sumitomo Chemical Co., Ltd., MFR: 2.5 g/lOmin, melting point: 158°C, mesopentad fraction: 97.0%, ethylene component: 0.6% by mole)

[PP-7]: A pellet obtained by melt mixing erucamide particles as organic polymer particles (manufactured by Sumitomo Chemical Co., Ltd., weight-average particle diameter: 3.5 µm) and glycerin monostearate as an anti-fogging agent (TB-123 manufactured by Matsumoto Yushi-Seiyaku Co., Ltd.) to propylene-ethylene-butene-1 random copolymer (FSX66E8 manufactured by Sumitomo Chemical Co., Ltd., content of ethylene: 2.5% by mole, content of butene: 7% by mole, MFR: 3.1 g/lOmin, melting point: 133°C) at a resin temperature of 240°C such that the content of the erucamide particles was 1.5% by weight, and the content of the glycerin monostearate was 0.45% by weight

### (Example 1)

As polypropylene-based resin constituting the base layer (A), a mixture of 50% by weight of [PP-1] and 50% by weight of [PP-2] was used; as resin constituting the seal layer (C), a mixture of 90% by weight of [PP-3] and 10% by weight of [PP-4] was used; as resin constituting the surface layer (B), 100% by weight of [PP-7] was used.

Using three melt extruders, the resin of the base layer (A) was extruded from a first extruder at a resin temperature of 280°C, the resin of the surface layer (B) was extruded from a second extruder at a resin temperature of 250°C, and the resin of the seal layer (C) was extruded from a third extruder at a resin temperature of 250°C, and then extruded with a T-die such that the order was the surface layer (B)/ the base layer (A)/ the seal layer (C) from a contact surface with a chill roll, which was cooled and solidified with a cooling roll of 30°C to obtain an unstretched sheet.

Subsequently, the sheet was stretched in the longitudinal direction by 4.5 times between metal rolls heated at 130°C utilizing the difference in circumferential velocity, which was introduced to a tenter stretching machine and stretched in the width direction by 9.5 times. A temperature of a preheating part of the tenter stretching machine was 168°C, and a temperature of a stretching part of the tenter stretching machine was 155°C.

In addition, in a second half in the tenter stretching machine, a heat fixing process at 163°C was followed by corona discharge treatment on the surface of the surface layer (B) with a corona discharge machine manufactured by Kasuga Denki Inc., and then, corona discharge treatment was similarly performed on the seal layer (C), which was rolled up by a film winder to obtain a polypropylene-based resin multilayer film capable of machine packaging. The resulting film thickness was 25 µm. The obtained film had a ratio of thickness of each layer of the surface layer (B)/ the base layer (A)/ the seal layer (C) = 1.0/ 21.9/ 2.1 (µm).

The obtained multilayer film was a film satisfying the requirements of the present invention, which had sufficient heat seal reaching strength and heat seal strength at a low temperature, and showed excellence in both suitability for automatic packaging and suitability for gusset packaging. In addition, anti-fogging effect also reached a level high enough for greengrocery packaging. The film composition and the resulting properties are shown in Table 1.

### (Example 2)

In the same manner as the example 1 except using a mixture of 55% by weight of [PP-1] and 45% by weight of [PP-2] as polypropylene-based resin constituting the base layer (A), and using a mixture of 25% by weight of [PP-6] and 75% by weight of [PP-7] as polypropylene-based resin constituting the surface layer (B), a multilayer film was obtained.

The obtained film showed excellence in both suitability for automatic packaging and suitability for gusset packaging like the film obtained in the example 1. In addition, anti-fogging effect also reached a level high enough for greengrocery packaging. The film composition and the resulting properties are shown in Table 1.

### (Example 3)

In the same manner as the example 1 except using a mixture of 60% by weight of [PP-1] and 40% by weight of [PP-2] as polypropylene-based resin constituting the base layer (A), a multilayer film was obtained.

The obtained film showed excellence in both suitability for automatic packaging and suitability for gusset packaging like the film obtained in the example 1. In addition, anti-fogging effect also reached a level high enough for greengrocery packaging. The film composition and the resulting properties are shown in Table 1.

### (Example 4)

In the same manner as the example 1 except using a mixture of 65% by weight of [PP-1] and 35% by weight of [PP-2] as polypropylene-based resin constituting the base layer (A), a multilayer film was obtained.

The obtained film showed excellence in both suitability for automatic packaging and suitability for gusset packaging like the film obtained in the example 1. In addition, anti-fogging effect also reached a level high enough for greengrocery packaging. The film composition and the resulting properties are shown in Table 1.

### (Example 5)

In the same manner as the example 2 except using a mixture of 65% by weight of [PP-1] and 35% by weight of [PP-2] as polypropylene-based resin constituting the base layer (A), a multilayer film was obtained.

The obtained film showed excellence in both suitability for automatic packaging and suitability for gusset packaging like the film obtained in the example 2. In addition, anti-fogging effect also reached a level high enough for greengrocery packaging. The film composition and the resulting properties are shown in Table 1.

### (Example 6)

In the same manner as the example 1 except using a mixture of 65% by weight of [PP-1] and 35% by weight of [PP-2] as polypropylene-based resin constituting the base layer
(A) and making the ratio of thickness of each layer of the surface layer (B)/ the base layer
(A)/ the seal layer (C) 1.0/ 20.6/ 3.4 (µm), a multilayer film was obtained.

The obtained film showed excellence in both suitability for automatic packaging and suitability for gusset packaging like the film obtained in the example 1. In addition, anti-fogging effect also reached a level high enough for greengrocery packaging. The film composition and the resulting properties are shown in Table 1.

### (Example 7)

In the same manner as the example 1 except using a mixture of 65% by weight of [PP-1] and 35% by weight of [PP-2] as polypropylene-based resin constituting the base layer (A), a multilayer film was obtained.

The obtained film showed excellence in both suitability for automatic packaging and suitability for gusset packaging like the film obtained in the example 1. In addition, anti-fogging effect also reached a level high enough for greengrocery packaging. The film composition and the resulting properties are shown in Table 1.

### (Example 8)

In the same manner as the example 1 except using a mixture of 65% by weight of [PP-1] and 35% by weight of [PP-2] as polypropylene-based resin constituting the base layer
(A) and making the ratio of thickness of each layer of the surface layer (B)/ the base layer
(A)/ the seal layer (C) 1.0/ 20.6/ 1.7 (µm), a multilayer film was obtained.

The obtained film showed excellence in both suitability for automatic packaging and suitability for gusset packaging like the film obtained in the example 1. In addition, anti-fogging effect also reached a level high enough for greengrocery packaging. The film composition and the resulting properties are shown in Table 1.

### (Example 9)

In the same manner as the example 1 except using a mixture of 70% by weight of [PP-1] and 30% by weight of [PP-2] as polypropylene-based resin constituting the base layer (A), a multilayer film was obtained.

The obtained film showed excellence in both suitability for automatic packaging and suitability for gusset packaging like the film obtained in the example 1. In addition, anti-fogging effect also reached a level high enough for greengrocery packaging. The film composition and the resulting properties are shown in Table 1.

### (Example 10)

In the same manner as the example 1 except using a mixture of 45% by weight of [PP-1] and 55% by weight of [PP-2] as polypropylene-based resin constituting the base layer (A), a multilayer film was obtained.

The obtained film showed excellence in both suitability for automatic packaging and suitability for gusset packaging. The film composition and the resulting properties are shown in Table 1.

### (Example 11)

In the same manner as the example 1 except using a mixture of 75% by weight of [PP-1] and 25% by weight of [PP-2] as polypropylene-based resin constituting the base layer (A), a multilayer film was obtained.

The obtained film showed excellence in both suitability for automatic packaging and suitability for gusset packaging. The film composition and the resulting properties are shown in Table 1.

### (Comparative example 1)

In the same manner as the example 1 except using 100% by weight of [PP-5] as polypropylene-based resin constituting the seal layer (C), a multilayer film was obtained.

The obtained film had a high onset temperature of heat seal strength of the seal layer (C) and was inferior in suitability for gusset packaging. The film composition and the resulting properties are shown in Table 2.

### (Comparative example 2)

In the same manner as the example 1 except using a mixture of 50% by weight of [PP-6] and 50% by weight of [PP-7] as polypropylene-based resin constituting the surface layer (B), a multilayer film was obtained.

The obtained film had a high onset temperature of heat seal strength of the surface layer (B) and was inferior in suitability for gusset packaging. The film composition and the resulting properties are shown in Table 2.

### (Comparative example 3)

In the same manner as the example 1 except using a mixture of 75% by weight of [PP-6] and 25% by weight of [PP-7] as polypropylene-based resin constituting the surface layer (B), a multilayer film was obtained.

The obtained film had a high onset temperature of heat seal strength of the surface layer (B) and was inferior in suitability for gusset packaging. The film composition and the resulting properties are shown in Table 2.

### (Comparative example 4)

In the same manner as the example 1 except using 100% by weight of [PP-6]as polypropylene-based resin constituting the surface layer (B), a multilayer film was obtained.

The obtained film had a high onset temperature of heat seal strength of the surface layer (B) and a low onset temperature of heat seal strength and, and was inferior in suitability for gusset packaging. The film composition and the resulting properties are shown in Table 2.

### (Comparative example 5)

In the same manner as the example 1 except making the thickness of the seal layer (C) 0.7 µm to make the thickness ratio of the seal layer 3%, a multilayer film was obtained.

The obtained film had a high onset temperature of heat seal strength of the seal layer (C) and inferior in suitability for gusset packaging. The film composition and the resulting properties are shown in Table 2.

### (Comparative example 6)

In the same manner as the example 1 except using 100% by weight of [PP-1] as polypropylene-based resin constituting the base layer (A), a multilayer film was obtained.

The obtained film had a high heat shrinkage ratio in the longitudinal direction and could not reduce sticking while gusset packaging. The film composition and the resulting properties are shown in Table 2.

### (Comparative example 7)

In the same manner as the example 1 except using a mixture of 85% by weight of [PP-1] and 15% by weight of [PP-2] as polypropylene-based resin constituting the base layer (A), a multilayer film was obtained.

The obtained film had a high test shrinkage ratio in the longitudinal direction and could not reduce sticking while gusset packaging. The film composition and the resulting properties are shown in Table 2.

**[Table 1]**

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Composition ratio of the base layer (A) (% by weight) | | [PP-1] | 50 | 55 | 60 | 65 | 65 | 65 | 65 | 65 | 70 | 45 | 25 |
| | | [PP-2] | 50 | 45 | 40 | 35 | 35 | 35 | 35 | 35 | 30 | 55 | 75 |
| Properties of resin composition of the base layer (A) | | MFR ( g/10min ) | 5 | 4.8 | 4.5 | 4.3 | 4.3 | 4.3 | 4.3 | 4.3 | 4 | 5.3 | 6.3 |
| | | Mesopentad fraction (%) | 98.0 | 97.9 | 97.8 | 97.7 | 97.7 | 97.7 | 97.7 | 97.7 | 97.6 | 98.0 | 98.4 |
| | | Content of α-olefin (ethylene) monomer-derived component (mol%) | 0.30 | 0.30 | 0.40 | 0.40 | 0.40 | 0.40 | 0.40 | 0.40 | 0.40 | 0.30 | 0.20 |
| Composition ratio of the seal layer (C) (% by weight) | | [PP-3] | 90 | 90 | 90 | 90 | 90 | 90 | 90 | 90 | 90 | 90 | 90 |
| | | [PP-4] | 10 | 10 | 10 | 10 | 10 | 10 | 10 | 10 | 10 | 10 | 10 |
| | | [PP-5] | | | | | | | | | | | |
| Composition ratio of the surface layer (B) (% by weight) | | [PP-6] | | 25 | | | 25 | | | | | | |
| | | [PP-7] | 100 | 75 | 100 | 100 | 75 | 100 | 100 | 100 | 100 | 100 | 100 |
| Thickness | Total | µm | 25 | 25 | 25 | 25 | 25 | 25 | 25 | 25 | 25 | 25 | 25 |
| | Base layer (A) | µm | 21.9 | 21.9 | 22.2 | 21.9 | 21.9 | 22.2 | 20.6 | 22.3 | 22.3 | 21.9 | 21.9 |
| | Surface layer (B) | µm | 1 | 1 | 0.7 | 1 | 1 | 0.7 | 1 | 1 | 1 | 1 | 1 |
| | Seal layer (C) | µm | 2.1 | 2.1 | 2.1 | 2.1 | 2.1 | 2.1 | 3.4 | 1.7 | 1.7 | 2.1 | 2.1 |
| | Surface layer (B) thickness/ Total thickness | % | 4.0 | 4.0 | 2.8 | 4.0 | 4.0 | 2.8 | 4.0 | 4.0 | 4.0 | 4.0 | 4.0 |
| | Seal layer (C) thickness/ Total thickness | % | 8.4 | 8.4 | 8.4 | 8.4 | 8.4 | 8.4 | 13.6 | 6.8 | 6.8 | 8.4 | 8.4 |
| Onset temperature of heat seal strength of the seal layer | | °C | 112 | 110 | 111 | 111 | 111 | 112 | 112 | 111 | 111 | 112 | 111 |
| Heat seal arrival strength of the seal layer | | N/15mm | 6.2 | 6.2 | 6.2 | 6.2 | 6.2 | 6.2 | 6.3 | 7.2 | 7,2 | 6.1 | 6.4 |
| Anti-fogging effect | | Rank | 1 | 1 | 1 | 1 | 1 | 1 | 1 | 1 | 1 | 1 | 5 |
| Onset temperature of heat seal strength of the surface layer | | °C | 132 | 136 | 127 | 131 | 136 | 127 | 131 | 131 | 131 | 132 | 133 |
| Heat seal arrival strength of the surface layer | | N/15mm | 3.9 | 4.2 | 3.9 | 3.9 | 4.2 | 3.9 | 4.1 | 3.9 | 3.9 | 3.8 | 4.1 |
| Heat shrinkage ratio in the longitudinal direction (120°C) | | % | 2.9 | 2.6 | 2.5 | 2.9 | 2.6 | 2.5 | 2.6 | 2.2 | 2.2 | 2.1 | 1.8 |
| Heat shrinkage ratio in the width direction (120°C) | | % | 0.5 | 0.8 | 0.8 | 0.5 | 0.8 | 0.8 | 0.7 | 0.6 | 0.6 | 0.5 | 0.4 |
| Suitability for automatic packaging | | | Excellent | Excellent | Excellent | Excellent | Excellent | Excellent | Excellent | Excellent | Excellent | Excellent | Excellent |
| Suitability for gusset packaging | | | Excellent | Excellent | Excellent | Excellent | Excellent | Excellent | Excellent | Excellent | Excellent | Excellent | Excellent |

**[Table 2]**

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Composition ratio of the base layer (A) (% by weight) | | [PP-1] | 65 | 65 | 65 | 65 | 65 | 100 | 85 |
| | | [PP-2] | 35 | 35 | 35 | 35 | 35 | 0 | 15 |
| Properties of resin composition of the base layer (A) | | MFR (g/10min) | 4.3 | 4.3 | 4.3 | 4.3 | 4.3 | 2.5 | 3.3 |
| | | Mesopentad fraction (%) | 97.7 | 97.7 | 97.7 | 97.7 | 97.7 | 97.0 | 97.3 |
| | | Content of α-olefin (ethylene) monomer-derived component (mol%) | 0.40 | 0.40 | 0.40 | 0.40 | 0.40 | 0.60 | 0.50 |
| Composition ratio of the seal layer (C) (% by weight) | | [PP-3] | | 90 | 90 | 90 | 90 | 90 | 90 |
| | | [PP-4] | | 10 | 10 | 10 | 10 | 10 | 10 |
| | | [PP-5] | 100 | | | | | | |
| Composition ratio of the surface layer (B) (% by weight) | | [PP-6] | | 50 | 75 | 100 | | | |
| | | [PP-7] | 100 | 50 | 25 | | 100 | 100 | 100 |
| Thickness | Total | µm | 25 | 25 | 25 | 25 | 25 | 25 | 25 |
| | Base layer (A) | µm | 21.9 | 21.9 | 21.9 | 21.9 | 23.3 | 21.9 | 21.9 |
| | Surface layer (B) | µm | 1 | 1 | 1 | 1 | 1 | 1 | 1 |
| | Seal layer (C) | µm | 2.1 | 2.1 | 2.1 | 2.1 | 0.7 | 2.1 | 2.1 |
| | Surface layer (B) thickness/ Total thickness | % | 4.0 | 4.0 | 4.0 | 4.0 | 4.0 | 4.0 | 4.0 |
| | Seal layer (C) thickness/ Total thickness | % | 8.4 | 8.4 | 8.4 | 8.4 | 2.8 | 8.4 | 8.4 |
| Onset temperature of heat seal strength of the seal layer | | °C | 117 | 111 | 111 | 111 | 117 | 111 | 112 |
| Heat seal arrival strength of the seal layer | | N/15mm | 6.3 | 6.2 | 6.2 | 6.2 | 5.1 | 6.2 | 6.4 |
| Anti-fogging effect | | Rank | 1 | 1 | 1 | 1 | 1 | 1 | 1 |
| Onset temperature of heat seal strength of the surface layer | | °C | 131 | 146 | 148 | 150 | 131 | 131 | 132 |
| Heat seal arrival strength of the surface layer | | N/15mm | 3.9 | 3.8 | 2.5 | 1.2 | 3.9 | 3.9 | 4.1 |
| Heat shrinkage ratio In the longitudinal direction (120°C) | | % | 2.6 | 2.7 | 2.6 | 2.6 | 2.6 | 4.1 | 3.8 |
| Heat shrinkage ratio in the width direction (120°C) | | % | 0.6 | 0.9 | 0.7 | 0.6 | 0.6 | 0.6 | 0.6 |
| Suitability for automatic packaging | | | Excellent | Excellent | Excellent | Excellent | Excellent | Excellent | Excellent |
| Suitability for gusset packaging | | | Fair | Fair | Fair | Fair | Fair | Bad | Bad |

### INDUSTRIAL APPLICABILITY

The polypropylene-based resin multilayer film capable of automatic packaging of the present invention can exhibit suitability for gusset packaging at lower cost than ever by optimizing the seal thickness and the composition. In addition, since the film has anti-fogging effect, it is suitable for packaging of greengrocery.

## Claims

1. A polypropylene-based resin multilayer film, comprising:
a base layer (A) consisting of a polypropylene-based resin composition;
a surface layer (B) consisting of a polypropylene-based resin composition on one side of the base layer (A); and
a seal layer (C) consisting of a polypropylene-based resin composition on the other side of the base layer (A),
the polypropylene-based resin multilayer film satisfying the following a) to d):
a) A heat shrinkage ratio in a longitudinal direction at 120°C of 3.0 % or less, wherein the heat shrinkage ratio is determined by cutting a sample with 20 mm in width and 200 mm in length from the film, hanging the sample in a hot air oven at 120°C and heating it for 5 minutes, measuring the length of the heated sample to obtain the reduced length due to shrinkage and determining the ratio of the reduced length to the length of the sample before being heated as the heat shrinkage ratio at 120°C;
b) An onset temperature of heat seal strength of the seal layer (C) of 100°C or higher and 115°C or lower, wherein the onset temperature of heat seal strength of the seal layer (C) is measured as defined in the specification as a temperature at which heat seal strength becomes 1 N/15mm when two surfaces of the seal layer (C) of a polypropylene-based resin multilayer film are placed face-to-face, and then heat sealed under a heat seal pressure 1 kg/cm² for 1 second using a thermal gradient tester;
c) An onset temperature of heat seal strength of the surface layer (B) of 125 °C or higher and 140°C or lower, wherein the onset temperature of heat seal strength of the seal layer (B) is measured as defined in the specification as a temperature at which heat seal strength becomes 1 N/15mm when two surfaces of the seal layer (B) of a polypropylene-based resin multilayer film are placed face-to-face, and then heat sealed under a heat seal pressure 1 kg/cm² for 1 second using a thermal gradient tester; and
d) A thickness of the seal layer (C) in the range of 5% or more and 15% or less with respect to a total thickness of the film.

2. The polypropylene-based resin multilayer film according to claim 1, wherein a mesopentad fraction of the polypropylene-based resin composition constituting the base layer (A) is 97.5% or more and 99.0% or less, the mesopentad fraction being measured with 13C-NMR as defined in the specification.

3. The polypropylene-based resin multilayer film according to claim 1 or 2, wherein a ratio of an α olefin monomer-derived component with respect to the total of a propylene monomer-derived component and the α olefin monomer-derived component of the polypropylene-based resin composition constituting the base layer (A) is 0.25% by mole or more and 0.6% by mole or less.

4. The polypropylene-based resin multilayer film according to any one of claims 1 to 3, wherein the seal layer (C) of the polypropylene-based resin multilayer film has heat seal reaching strength of 3.0 N/15mm or more, and the surface layer (B) of the polypropylene-based resin multilayer film has heat seal reaching strength of 3.0 N/15mm or more,
wherein the heat seal reaching strength of the seal layer (C) is measured by placing two surfaces of the seal layer of a polypropylene-based resin multilayer film face-to-face, and then heat sealing them using a thermal gradient tester under a heat seal pressure of 1 kg/cm² for 1 second, cutting the center part of the sample so that the width is 15 mm, which is set to an upper chuck and a lower chuck of a tensile tester to obtain heat seal strength when the sample is drawn at a tension rate of 200 mm/min, and, with the upper limit of heat seal temperature 150°C, a maximum strength is determined as a heat seal reaching strength of the seal layer (C),
and wherein a heat seal reaching strength of the surface layer (B) is measured in the same manner as the measurement of the heat seal reaching strength of the seal layer (C) by placing two surfaces of the surface layer (B) of a polypropylene-based resin multilayer film face-to-face.

5. The polypropylene-based resin multilayer film according to any one of claims 1 to 4, wherein the seal layer (C) contains more than one polypropylene-based resins, a polypropylene-based resin having the lowest melting point among the more than one polypropylene-based resins has a melting point of 70 to 100°C, and a content of the polypropylene-based resin having the lowest melting point with respect to the total of the seal layer (C) is 1% by weight or more and 50% by weight or less.

6. The polypropylene-based resin multilayer film according to any one of claims 1 to 5, wherein the seal layer (C) contains more than one polypropylene-based resins, a polypropylene-based resin having the highest melting point among the more than one polypropylene-based resins has a melting point of 100°C or higher and 140°C or lower, and a content of the polypropylene-based resin having the highest melting point is 50 to 99% by weight.

7. The polypropylene-based resin multilayer film according to any one of claims 1 to 6, wherein the seal layer (C) contains more than one polypropylene-based resins, the more than one polypropylene-based resins have a melting point in the range of 70 to 140°C, a content of polypropylene-based resins having a melting point of 70 to 100°C is 1% by weight or more and 50% by weight or less, and a content of polypropylene-based resins having a melting point of 100 to 140°C is 50% by weight or more and 99% by weight or less.

8. The polypropylene-based resin multilayer film according to any one of claims 1 to 7, wherein polypropylene-based resin contained in the surface layer (B) has a melting point in the range of 120 to 140°C.

9. A package comprising the polypropylene-based resin multilayer film according to any one of claims 1 to 8.

## Patentansprüche

1. Eine mehrschichtige Harzfolie auf Polypropylenbasis, umfassend:
eine Basisschicht (A), bestehend aus einer Harzzusammensetzung auf Polypropylenbasis;
eine Oberflächenschicht (B), bestehend aus einer Harzzusammensetzung auf Polypropylenbasis auf einer Seite der Basisschicht (A); und
eine Siegelschicht (C), bestehend aus einer Harzzusammensetzung auf Polypropylenbasis auf der anderen Seite der Basisschicht (A),
wobei die mehrschichtige Harzfolie auf Polypropylenbasis die folgenden a) bis d) erfüllt:
a) ein Wärmeschrumpfungsverhältnis in einer Längsrichtung bei 120°C von 3,0% oder weniger, wobei das Wärmeschrumpfungsverhältnis bestimmt wird, indem eine Probe mit einer Breite von 20 mm und einer Länge von 200 mm von der Folie abgeschnitten wird, die Probe in einen Heißluftofen bei 120°C gehängt und 5 Minuten lang erwärmt wird, die Länge der erwärmten Probe gemessen wird, um die durch Schrumpfung verringerte Länge zu erhalten, und das Verhältnis der verringerten Länge zur Länge der Probe vor dem Erwärmen als das Wärmeschrumpfungsverhältnis bei 120°C bestimmt wird;
b) eine Anfangstemperatur der Heißsiegelfestigkeit der Siegelschicht (C) von 100°C oder höher und 115°C oder niedriger, wobei die Anfangstemperatur der Heißsiegelfestigkeit der Siegelschicht (C) wie in der Beschreibung definiert als eine Temperatur gemessen wird, bei der die Heißsiegelfestigkeit 1 N/15 mm beträgt, wenn zwei Oberflächen der Siegelschicht (C) einer mehrschichtigen Harzfolie auf Polypropylenbasis gegenüberliegend angeordnet und dann unter einem Heißsiegeldruck von 1 kg/cm² für 1 Sekunde unter Verwendung eines Wärmegradientenprüfgeräts heißgesiegelt werden;
c) eine Anfangstemperatur der Heißsiegelfestigkeit der Oberflächenschicht (B) von 125°C oder höher und 140°C oder niedriger, wobei die Anfangstemperatur der Heißsiegelfestigkeit der Siegelschicht (B) wie in der Beschreibung definiert als eine Temperatur gemessen wird, bei der die Heißsiegelfestigkeit 1 N/15 mm beträgt, wenn zwei Oberflächen der Siegelschicht (B) einer mehrschichtigen Harzfolie auf Polypropylenbasis gegenüberliegend angeordnet werden und dann unter einem Heißsiegeldruck von 1 kg/cm² für 1 Sekunde unter Verwendung eines Wärmegradientenprüfgeräts heißgesiegelt werden; und
d) eine Dicke der Siegelschicht (C) im Bereich von 5% oder mehr und 15% oder weniger, bezogen auf eine Gesamtdicke der Folie.

2. Die mehrschichtige Harzfolie auf Polypropylenbasis nach Anspruch 1, wobei ein Mesopentadenanteil der Harzzusammensetzung auf Polypropylenbasis, welche die Basisschicht (A) bildet, 97,5% oder mehr und 99,0% oder weniger beträgt, wobei der Mesopentadenanteil mit 13C-NMR, wie in der Beschreibung definiert, gemessen wird,

3. Die mehrschichtige Harzfolie auf Polypropylenbasis nach Anspruch 1 oder 2, wobei ein Verhältnis einer von einem α-Olefinmonomer abgeleiteten Komponente, bezogen auf die Gesamtheit einer von einem Propylenmonomer abgeleiteten Komponente und der von einem α-Olefinmonomer abgeleiteten Komponente der Harzzusammensetzung auf Polypropylenbasis, die die Basisschicht (A) bildet, 0,25 Mol-% oder mehr und 0,6 Mol-% oder weniger beträgt.

4. Die mehrschichtige Harzfolie auf Polypropylenbasis nach einem der Ansprüche 1 bis 3, wobei die Siegelschicht (C) der mehrschichtigen Harzfolie auf Polypropylenbasis eine Heißsiegel-Erreichungsfestigkeit von 3,0 N/15 mm oder mehr aufweist und die Oberflächenschicht (B) der mehrschichtigen Harzfolie auf Polypropylenbasis eine Heißsiegel-Erreichungsfestigkeit von 3,0 N/15 mm oder mehr aufweist,
wobei die die Heißsiegel-Erreichungsfestigkeit der Siegelschicht (C) gemessen wird, indem zwei Oberflächen der Siegelschicht einer mehrschichtigen Harzfolie auf Polypropylenbasis gegenüberliegend angeordnet und dann unter Verwendung eines Wärmegradientenprüfgeräts unter einem Heißsiegelungsdruck von 1 kg/cm² für 1 Sekunde heißgesiegelt werden, der Mittelteil der Probe so geschnitten wird, dass die Breite 15 mm beträgt, welcher in ein oberes Spannfutter und ein unteres Spannfutter eines Zugprüfgeräts eingebracht wird, um eine Heißsiegelfestigkeit zu erhalten, wenn die Probe mit einer Zuggeschwindigkeit von 200 mm/min gezogen wird, und wobei mit der Obergrenze der Heißsiegeltemperatur von 150°C eine maximale Festigkeit als eine Heißsiegel-Erreichungsfestigkeit der Siegelschicht (C) bestimmt wird,
und wobei eine die Heißsiegel-Erreichungsfestigkeit der Oberflächenschicht (B) auf die gleiche Weise wie die Messung der Heißsiegel-Erreichungsfestigkeit der Siegelschicht (C) gemessen wird, indem zwei Oberflächen der Oberflächenschicht (B) einer mehrschichtigen Harzfolie auf Polypropylenbasis gegenüberliegend angeordnet werden.

5. Die mehrschichtige Harzfolie auf Polypropylenbasis nach einem der Ansprüche 1 bis 4, wobei die Siegelschicht (C) mehr als ein Harz auf Polypropylenbasis enthält, ein Harz auf Polypropylenbasis mit dem niedrigsten Schmelzpunkt unter den mehr als einem Harzen auf Polypropylenbasis einen Schmelzpunkt von 70 bis 100°C aufweist und ein Gehalt des Harzes auf Polypropylenbasis mit dem niedrigsten Schmelzpunkt, bezogen auf die Gesamtheit der Siegelschicht (C), 1 Gew.-% oder mehr und 50 Gew.-% oder weniger beträgt.

6. Die mehrschichtige Harzfolie auf Polypropylenbasis nach einem der Ansprüche 1 bis 5, wobei die Siegelschicht (C) mehr als ein Harz auf Polypropylenbasis enthält, ein Harz auf Polypropylenbasis mit dem höchsten Schmelzpunkt unter den mehr als einem Harzen auf Polypropylenbasis einen Schmelzpunkt von 100°C oder höher und 140°C oder niedriger aufweist und ein Gehalt des Harzes auf Polypropylenbasis mit dem höchsten Schmelzpunkt 50 bis 99 Gew.-% beträgt.

7. Die mehrschichtige Harzfolie auf Polypropylenbasis nach einem der Ansprüche 1 bis 6, wobei die Siegelschicht (C) mehr als ein Harz auf Polypropylenbasis enthält, die mehr als ein Harze auf Polypropylenbasis einen Schmelzpunkt im Bereich von 70 bis 140°C aufweisen, ein Gehalt an Harzen auf Polypropylenbasis mit einem Schmelzpunkt von 70 bis 100°C 1 Gew.-% oder mehr und 50 Gew.-% oder weniger beträgt und ein Gehalt an Harzen auf Polypropylenbasis mit einem Schmelzpunkt von 100 bis 140°C 50 Gew.-% oder mehr und 99 Gew.-% oder weniger beträgt.

8. Die mehrschichtige Harzfolie auf Polypropylenbasis nach einem der Ansprüche 1 bis 7, wobei das in der Oberflächenschicht (B) enthaltene Harz auf Polypropylenbasis einen Schmelzpunkt im Bereich von 120 bis 140°C aufweist.

9. Eine Verpackung, umfassend die mehrschichtige Harzfolie auf Polypropylenbasis nach einem der Ansprüche 1 bis 8.

## Revendications

1. Film multicouche de résine à base de polypropylène, comprenant :
une couche de base (A) consistant en une composition de résine à base de polypropylène ;
une couche de surface (B) consistant en une composition de résine à base de polypropylène sur un côté de la couche de base (A) ; et
une couche d'étanchéité (C) consistant en une composition à base de polypropylène sur l'autre côté de la couche de base (A),
le film multicouche de résine à base de polypropylène satisfaisant aux points a) à d) suivants :
a) un taux de retrait thermique dans la direction longitudinale à 120 °C de 3,0 % ou moins, lequel taux de retrait thermique est déterminé par découpe d'un échantillon de 20 mm de largeur et 200 mm de longueur dans le film, suspension de l'échantillon dans un four à air chaud à 120 °C et chauffage de celui-ci pendant 5 minutes, mesure de la longueur de l'échantillon chauffé pour que soit obtenue la longueur réduite due au retrait, et détermination du rapport de la longueur réduite à la longueur de l'échantillon avant chauffage en tant que taux de retrait thermique à 120 °C ;
b) une température d'apparition de la force de thermoscellage de la couche d'étanchéité (C) de 100 °C ou plus et 115 °C ou moins, laquelle température d'apparition de la force de thermoscellage de la couche d'étanchéité (C) est mesurée comme défini dans le fascicule en tant que température à laquelle la force de thermoscellage devient de 1 N/15 mm quand deux surfaces de la couche d'étanchéité (C) d'un film multicouche de résine à base de polypropylène sont placées face à face, et ensuite thermoscellées sous une pression de thermoscellage de 1 kg/cm² pendant 1 seconde au moyen d'un testeur de gradient thermique ;
c) une température d'apparition de la force de thermoscellage de la couche de surface (B) de 125 °C ou plus et 140 °C ou moins, laquelle température d'apparition de la force de thermoscellage de la couche de surface (B) est mesurée comme défini dans le fascicule en tant que température à laquelle la force de thermoscellage devient de 1 N/15 mm quand deux surfaces de la couche de surface (B) d'un film multicouche de résine à base de polypropylène sont placées face à face, et ensuite thermoscellées sous une pression de thermoscellage de 1 kg/cm² pendant 1 seconde au moyen d'un testeur de gradient thermique ; et
d) une épaisseur de la couche d'étanchéité (C) dans la plage de 5% ou plus à 15 % ou moins par rapport à l'épaisseur totale du film.

2. Film multicouche de résine à base de polypropylène selon la revendication 1, dans lequel une fraction de mésopentade de la composition de résine à base de polypropylène constituant la couche de base (A) est de 97,5 % ou plus et 99,0 % ou moins, la fraction de mésopentade étant mesurée par RMN-¹³C comme défini dans le fascicule.

3. Film multicouche de résine à base de polypropylène selon la revendication 1 ou 2, dans lequel le ratio du composant dérivé d'un monomère d'α-oléfine par rapport au total du composant dérivé de monomère de propylène et du composant dérivé de monomère d'a-oléfine de la composition de résine à base de polypropylène constituant la couche de base (A) est de 0,25 % en moles ou plus et 0,6 % en moles ou moins.

4. Film multicouche de résine à base de polypropylène selon l'une quelconque des revendications 1 à 3, dans lequel la couche d'étanchéité (C) du film multicouche de résine à base de polypropylène a une force d'obtention de thermoscellage de 3,0 N/15 mm ou plus, et la couche de surface (B) du film multicouche de résine à base de polypropylène a une force d'obtention de thermoscellage de 3,0 N/15 mm ou plus,
dans lequel la force d'obtention de thermoscellage de la couche d'étanchéité (C) est mesurée par placement côte à côte de deux surfaces de la couche d'étanchéité d'un film multicouche de résine à base de polypropylène, et ensuite thermoscellage de celles-ci au moyen d'un testeur de gradient thermique sous une pression de thermoscellage de 1 kg/cm² pendant 1 seconde, découpe de la partie centrale de l'échantillon de façon que la largeur soit de 15 mm, laquelle est fixée à un mandrin supérieur et un mandrin inférieur d'un testeur de traction pour que soit obtenue la force de thermoscellage quand l'échantillon est tiré à une vitesse de traction de 200 mm/min et, avec une limite supérieure de température de thermoscellage de 150 °C, la force maximale est déterminée en tant que force d'obtention de thermoscellage de la couche d'étanchéité (C),
et dans lequel la force d'obtention de thermoscellage de la couche de surface (B) est mesurée de la même manière que pour la mesure de la force d'obtention de thermoscellage de la couche d'étanchéité (C) par placement face à face de deux surfaces de la couche de surface (B) d'un film multicouche de résine à base de polypropylène.

5. Film multicouche de résine à base de polypropylène selon l'une quelconque des revendications 1 à 4, dans lequel la couche d'étanchéité (C) contient plus d'une résine à base de polypropylène, une résine à base de polypropylène ayant le point de fusion le plus bas parmi les plus d'une résines à base de polypropylène a un point de fusion de 70 à 100 °C, et une teneur de la résine à base de polypropylène ayant le point de fusion le plus bas par rapport au total de la couche d'étanchéité (C) est de 1 % en poids ou plus et 50 % en poids ou moins.

6. Film multicouche de résine à base de polypropylène selon l'une quelconque des revendications 1 à 5, dans lequel la couche d'étanchéité (C) contient plus d'une résine à base de polypropylène, une résine à base de polypropylène ayant le point de fusion le plus élevé parmi les plus d'une résines à base de polypropylène a un point de fusion de 100 °C ou plus et 140 °C ou moins, et la teneur en la résine à base de polypropylène ayant le point de fusion le plus élevé est de 50 à 99 % en poids.

7. Film multicouche de résine à base de polypropylène selon l'une quelconque des revendications 1 à 6, dans lequel la couche d'étanchéité (C) contient plus d'une résine à base de polypropylène, les plus d'une résines à base de polypropylène ont un point de fusion situé dans la plage allant de 70 à 140 °C, la teneur en les résines à base de polypropylène ayant un point de fusion de 70 à 100 °C est de 1 % en poids ou plus et 50 % en poids ou moins, et la teneur en les résines à base de polypropylène ayant un point de fusion de 100 à 140 °C est de 50 % en poids ou plus et 99 % en poids ou moins.

8. Film multicouche de résine à base de polypropylène selon l'une quelconque des revendications 1 à 7, dans lequel la résine à base de polypropylène contenue dans la couche de surface (B) a un point de fusion situé dans la plage allant de 120 à 140 °C.

9. Emballage comprenant le film multicouche de résine à base de polypropylène selon l'une quelconque des revendications 1 à 8.
